# EUROPÄISCHE PATENTANMELDUNG

(11) **EP 1 437 369 A1**
(43) Veröffentlichungstag der Anmeldung: **14.07.2004**
(21) Anmeldenummer: 03000185.3
(22) Anmeldetag: 07.01.2003
(51) Int. Cl.: C08F 8/00

(54) **Teilvernetzter Polyvinylalkohol**

(71) Anmelder: Clariant GmbH, 65929 Frankfurt am Main (DE)
(72) Erfinder: Huth, Hans-Ullrich, Dr., 63329 Egelsbach (DE); Rath, Heinz Jörg, Dr., 65857 Waldaschaff (DE)
(74) Vertreter: Mikulecky, Klaus

(57) **Zusammenfassung**

Teilvernetzter Polyvinylalkohol wird erhalten durch Reaktion eines Polyvinylalkohols mit einer Polycarbonsäure, insbesondere einer Hydroxypolycarbonsäure. Aus diesem teilvernetztem Polyvinylalkohol lassen sich Folien herstellen, die gut wasserlöslich oder -quellbar sind. Aufgrund dieser Eigenschaft eignen sich derartige Folien gut als Verpackungsmaterial für Waschmittel, Kosmetika und dergleichen wobei sich die Verpackung im Wasser löst und den Inhalt freigibt oder zur Freisetzung (Permeation) von chemischen Verbindungen bzw. Wirkstoffen eignet.

## Beschreibung

Polyvinylalkohol (PVA) ist ein Makromolekül, das durch Verseifung (Umesterung) aus Polyvinylacetat hergestellt wird und neben den Vinylalkoholeinheiten noch Acetylgruppen enthält. Man unterscheidet daher zwischen voll- und teilverseiften Typen. Daraus ergeben sich unterschiedliche Eigenschaften und Anwendungen.

So dient PVA z.B. als Schutzkolloid bei der Emulsionspolymerisation von verzweigten Vinylmonomeren zur Stabilisierung von Polymerteilchen sowie zur Einstellung von fließtechnischen Eigenschaften. Aufgrund der Löslichkeit sowie der besseren Adsorptionseigenschaften auf der Latexteilchenoberfläche und der höheren Grenzflächenaktivität werden für diesen Zweck überwiegend teilverseifte Typen einzeln bzw. in Kombination mit vollverseiften Typen eingesetzt. Der Vorteil von PVA ist seine besonders gute stabilisierende Wirkung, so dass auf andere Emulgatoren und Dispergierhilfsmittel weitgehend verzichtet werden kann. Durch die Menge des PVA und seinen Hydrolysegrad lassen sich durchschnittliche Teilchengröße, Agglomeratbildung sowie anwendungstechnische Eigenschaften (Klebkraft, Vemetzung, Wasserbeständigkeit und Reißfestigkeit von Dispersionsfilmen oder Pigment-/salzverträglichkeit der Dispersionen) hervorragend beeinflussen.

Auf dem Textilsektor wird PVA vorwiegend zum Schlichten von Kettmaterial eingesetzt. Hier dient es zum Festigen der Gewebekonstruktion, damit beim Webverfahren keine Faserschädigung durch mechanische Beanspruchung auftritt. Anschließend wird das Schlichtematerial (PVA) meist wieder ausgewaschen. Als wesentliche Eigenschaften werden u.a. hohe Lösegeschwindigkeit des Rohstoffes oder Auswaschbarkeit der Schlichte, geringe Schaumneigung, hohe Klebkraft zum Textil sowie gute Filmbildung gefordert und durch PVA überwiegend auch erreicht.

PVA kann aber auch, ähnlich wie Stärke oder deren Abbauprodukte, als Rohstoff zur Herstellung von Klebstofflösungen (z.B. Briefmarken, Etiketten, Briefumschläge u.a.) verwendet werden. Vorteilhaft ist die einheitliche chemische Struktur und hohe Klebkraft bei geringem Materialeinsatz.

In der Papierindustrie, d.h. bei der Herstellung von Roh- als auch gestrichenem Papier, zeichnet sich PVA durch hohe Pigment- und Faserbindekraft, ausgezeichnete Trägereigenschaften für optische Aufheller, sehr gute Eignung als viskositätsstabile Schutzkolloide sowie Strichwasserfestigkeit aus, wobei hier besonders die niedrigviskosen vollverseiften PVA-Typen eingesetzt werden.

PVA wird inzwischen wegen der niedrigen Aschegehalte, der Verwendung von Wasser als Lösemittel und einem geringen Schwund beim Brennen auch als zeitlich begrenztes Binde- und Plastifizierungsmittel für Keramikformkörper, insbesondere der Elektrokeramik verwendet.

Nicht zuletzt eignet sich PVA nach externer Weichmachung zur Herstellung wasserlöslicher blasextrudierter Folien für die verschiedensten Anwendungen (Wäschebeutel, Waschmittelbeutel, Pflanzenschutzkonfektionierung). Je nach PVA-Typ, Weichmachergehalt und -menge sowie Extrusionsbedingungen kann man schnell- bis schwerlösliche Folien herstellen.

Für die meisten dieser Anwendungsgebiete eignen sich die handelsüblichen teiloder vollverseiften PVA-Typen mit einem Verseifungsgrad von rd. 80 bis 100 Mol-%. Die hohe Zahl der OH-Gruppen und deren Wechselwirkungen machen zwar einerseits die umweltfreundliche Verarbeitung in Wasser möglich und sind für die biologische Abbaubarkeit des Polymers verantwortlich, führen aber auch zu einem Abbau unterhalb des Schmelzpunktes, so dass dieser Werkstoff nicht ohne zusätzliche externe Weichmachung thermoplastisch verarbeitet werden kann oder höhere Temperaturen zur Herstellung der wässrigen Lösungen erforderlich sind. Verbesserungen durch die Erhöhung des Acetylgruppenanteils sind nur bedingt möglich.

Ein weiterer Nachteil ist, dass PVA (Folien) sich auf Dauer immer löst (lösen), d.h. dieser Rohstoff nicht für Anwendungen in Frage kommt, bei denen es auf eine gewisse Unlöslichkeit, aber dafür einstellbare Quellbarkeit oder Wasseraufnahme bzw. hydrolytische oder enzymatische Abbaubarkeit ankommt.

In US 3 249 572 und DE 694 03 067 werden Reaktionsprodukte aus PVA und Polyethylenimin und Monocarbonsäuren bzw. Milchsäure beschrieben. Keines dieser Dokumente beschreibt die Verwendung einer mehrwertigen (Hydroxy)Polycarbonsäure.

Überaschenderweise konnten nun durch Umsetzung von PVA beliebiger Zusammensetzung mit Polycarbonsäuren bzw. deren Estern neue Polymere erhalten werden, die die obigen Nachteile nicht mehr besitzen und neue und interessante Eigenschaften aufweisen.

Die Erfindung betrifft vernetzte Polyvinylalkohole, die hauptsächlich aus Polyvinylalkoholeinheiten bestehen, daneben jedoch 0,1 bis 50 % Polycarbonsäureeinheiten enthalten, und die über teilweise Ether- und/oder Esterbindungen mit dem PVA verknüpft sein können und je nach Reaktivität durch Umsetzung von PVA bei Raumtemperatur oder höherer Temperatur in Lösung oder Substanz mit einer oder mehreren Polycarbonsäure oder deren Estern erhalten werden.

Gegenstand der Erfindung sind vernetzte Polyvinylalkohole, die erhalten werden durch Umsetzung von Polyvinylalkohol mit Verbindungen der Formel

**ROOC - A- COOR**

wobei A eine oder mehrere, gleiche oder verschiedene Gruppen der Formeln -(CH₂)ₘ-; -(CH=CH)ₙ-;
-(C₆HᵤX₄₋ᵤ)ₒ-; -(C₅H₃)ₚ-; -(C₆H₁₀)_{q}-; -(CH(OH))ᵣ-; -(CH(COOR))ₛ-;
-(C(OH)(COOR))ₜ- bedeutet, X H, OH oder COOR, R H, CₐH₂ₐ₋₁ oder ein Erdalkalioder Alkalimetallatom bzw. NH₄ bedeuten und a Zahlen von 1 bis 10, m Zahlen von 0 bis 20, n Zahlen von 0 bis 6, o Zahlen von 0 bis 3, p Zahlen von 0 bis 3, q Zahlen von 0 bis 3, r Zahlen von 0 bis 10, s Zahlen von 0 bis 5, t Zahlen von 0 bis 5 und u Zahlen von 1 bis 4 bedeuten.

Bevorzugt sind Hydroxypolycarbonsäuren, d.h. Verbindungen der oben genannten Formel, wobei A eine Gruppe der Formel -(CH(OH))ᵣ-, eine Kombination von Gruppen der Formel -(CH(OH))ᵣ- und -(CH₂)ₘ- oder eine Kombination von Gruppen der Formel -(C(OH)(COOH))ₜ- und -(CH₂)ₘ- darstellt und R Wasserstoff oder Methyl bedeutet. Insbesondere bevorzugt sind Weinsäure, Äpfelsäure, Zitronensäure. Geeignet sind auch Polycarbonsäuren, die frei von Hydroxylgruppen sind, sowie ein- oder mehrfach ungesättigte Polycarbonsäuren, die 1 bis 6, vorzugsweise 1 bis 3 Doppelbindungen enthalten. Die Gruppen COOR können als freie Säuregruppen, als Anhydridgruppen, als (Erd)Alkalisalz oder als Ester vorliegen. Bevorzugt liegen die Polycarbonsäuren als freie Säuren oder Ester, beispielsweise als Methylester, vor.

Der Polyvinylalkohol kann ein teil- oder vollverseifter Typ sein oder ein Gemisch beider Typen. Der Verseifungsgrad des teilverseiften Typs liegt zwischen 75 und 100, vorzugsweise zwischen 80 und 93 Mol-% und der Verseifungsgrad des vollverseiften Typs zwischen 80 und 100, vorzugsweise zwischen 97 und 100 Mol-%. Der Polymerisationsgrad Pw kann zwischen 50 und 5000 liegen, bevorzugt sind Produkte mit einem Pw von 200 bis 3000. Falls Mischungen von beiden Verseifungstypen eingesetzt werden, kann das Verhältnis kontinuierlich zwischen 0,1 und 99,9 Gew.-% variiert werden.

Das Gewichtsverhältnis der Ausgangskomponenten beträgt vorzugsweise 100 Gewichtsteile Polyvinylalkohol zu 0,1 Gewichtsteile Polycarbonsäure bis 1 Gewichtsteil Polyvinylalkohol zu 1 Gewichtsteil Polycarbonsäure. Besonders bevorzugt ist ein Gew.-Verhältnis von 100:0,5 bis 100:20.

Die Herstellung der vernetzten Polyvinylalkohole erfolgt entweder durch Umsetzung in Lösung oder Suspension, vorzugsweise in einem für beide Reaktanden geeigneten Lösemittel wie Wasser, oder in Substanz, d. h. in Abwesenheit eines Lösungsmittels. Im ersten Fall wird zweckmäßigerweise durch Erhitzen auf höhere Temperatur (80 bis 250°C, vorzugsweise 80 bis 200°C), gegebenenfalls unter Inertgasatmosphäre und Abdestillation der flüchtigen Komponenten ( Wasser, Alkohol, Lösungsmittel) gearbeitet und die Reaktion zum gewünschten Umsetzungsgrad geführt. In der zweiten Variante wird der PVA, gegebenenfalls unter Zusatz von üblichen geeigneten Weichmachern, mit der Polycarbonsäure abgemischt und in einer geeigneten Apparatur, vorzugsweise in einem Extruder, gegebenenfalls unter Inertgasatmosphäre bei Temperaturen zwischen 80 bis 250°C, vorzugsweise 150 bis 230°C in der Schmelze bis zur erwünschten Umsetzung verarbeitet. Anschließend kann in einem zweiten Verarbeitungsschritt das Umsetzungsprodukt gegebenenfalls durch Blasextrusion zu Folien verarbeitet werden.

Das erfindungsgemäße Umsetzungsprodukt lässt sich als Rohstoff für die Herstellung von Filmen, Folien, Fasern, Lacken, Klebstoffen sowie als Zusatz- oder Hilfsmittel in der Kosmetik, bei der Papier- und Dispersionsherstellung einsetzen. Die Verarbeitung kann sowohl in Substanz über die Schmelze oder aus Lösung erfolgen. Vorteile sind je nach Reaktionsführung und Umsetzungsgrad, ein breites und leicht einstellbares Spektrum von Löslichkeit bis Quellbarkeit, eine leichtere Extrudierbarkeit, die einfacheren und vielfältigen Vernetzungs- und Härtungsmöglichkeiten sowie eine bessere Haftung zu Oberflächen im Vergleich zum Ausgangs-Polyvinylalkohol.

Insbesondere eignen sich die erfindungsgemäßen Produkte als wasserlösliche Folien oder Kapseln zum Einpacken oder Umhüllen von wasserlöslichen Formulierungen, wie beispielsweise Wasch- und Reinigungsmittel, kosmetische Zubereitungen oder Pflanzenschutzformulierungen.
Die nachfolgenden Beispiele sollen die Erfindung näher erläutern.

### Beispiel 1

10 kg PVA mit einem Polymerisationsgrad von etwa 600 und einem mittleren Hydrolysegrad von rund 88 Mol-% wurde in einem Zwangsmischer mit 10 % einer Mischung aus Glycerin und Wasser weichgestellt. Anschließend wurden 100 g Weinsäuredimethylester zugefügt. Diese Mischung wurde in einem Doppelschneckenextruder mit Vakuumanschluss bei 190°C als Strang extrudiert. Der flüssige Harzstrang wurde erst in einem Wasserbad, anschließend über Luftdüsen abgekühlt, getrocknet und granuliert. Man erhielt ein fast farbloses, transparentes Harzgranulat, das leicht löslich in Wasser ist, einen Tg -Wert von 52°C, eine Viskosität (4 % nach DIN 53015) von 4,9 mPas und einen Schmelzindex von 3,0 g/10 min (190°C/2,16 kg) besitzt.

### Beispiel 2

Eine Lösung aus 40 g PVA mit einem Polymerisationsgrad von etwa 1000 und einem mittleren Hydrolysegrad von rd. 98 Mol-% in 160 ml Wasser und 1,2 g Maleinsäureanhydrid wurden 5 Stunden auf 110°C erhitzt und das Wasser dabei langsam entfernt. Man erhielt ein helles, festes Harz, das unlöslich in Wasser ist und eine T_{G} von 87°C aufweist. Nach 24 Stunden Wasserlagerung nimmt das Harz etwa 68 % Wasser auf.

### Beispiel 3

Es wurde ein weichgestelltes PVA Granulat wie in Beispiel 1 hergestellt und mit 1 % Zitronensäure gemischt. Diese Mischung wurde in einem Doppelschneckenextruder mit Vakuumanschluss bei 179°C strangextrudiert. Nach einer kurzen Abkühlstrecke in Wasser wurde der Strang mit Luftdüsen weiter gekühlt und getrocknet sowie anschließend granuliert. Das leicht gelblich-bernsteinfarbige Harz löst sich leicht in Wasser und besitzt folgende Eigenschaften: Tg 48°C, MFI 7,5 g/min (190°C/2,16 kg). Das Harz ist leicht löslich in Wasser und weist eine Viskosität von 4,0 mPas (4 % nach DIN 53015) auf.

### Beispiel 4 (Phthalsäureanhydrid) in Lösung

Eine Lösung aus 40 g PVA mit einem Polymerisationsgrad von etwa 3000 und einem mittleren Hydrolysegrad von rd. 88 Mol-% in 160 ml Wasser und 0,8 g Phthalsäureanhydrid in 160 ml Wasser werden 5 Stunden auf 130°C erhitzt und das Wasser dabei langsam entfernt. Man erhielt ein helles, gelbliches Harz mit einer T_{G} von 80°C, in dem der PVA teilweise durch das Säureanhydrid vernetzt wurde, denn es löst sich in Wasser teilweise auf, ein Teil bleibt als weiches, stark gequollenes und unlösliches Gel zurück.

### Beispiel 5

Eine Lösung aus 40 g PVA mit einem Polymerisationsgrad von etwa 600 und einem mittleren Hydrolysegrad von ca. 88 Mol-% und 1,6 g Zitronensäure in 160 ml Wasser wurden 3 Stunden auf 140°C erhitzt. Man erhielt 42 g eines gelblichen, festen Harzes. Das Produkt ist in kaltem und heißem Wasser unlöslich und besitzt eine Quellbarkeit von rund 4 %.

## Patentansprüche

1. Vernetzte Polyvinylalkohole, die erhalten werden durch Umsetzung von Polyvinylalkohol mit Verbindungen der Formel (1)
ROOC - A- COOR (1)
wobei A eine oder mehrere, gleiche oder verschiedene Gruppen der Formeln -(CH₂)ₘ-; -(CH=CH)ₙ-;
-(C₆HᵤX₄₋ᵤ)ₒ-; -(C₅H₃)ₚ-; -(C₆H₁₀)_{q}-; -(CH(OH))ᵣ-; -(CH(COOR))ₛ-;
-(C(OH)(COOR))ₜ- bedeutet, X H, OH oder COOR, R H, CₐH₂ₐ₋₁ oder ein Erdalkalioder Alkalimetallatom bzw. NH₄ bedeuten und a Zahlen von 1 bis 10, m Zahlen von 0 bis 20, n Zahlen von 0 bis 6, o Zahlen von 0 bis 3, p Zahlen von 0 bis 3, q Zahlen von 0 bis 3, r Zahlen von 0 bis 10, s Zahlen von 0 bis 5, t Zahlen von 0 bis 5 und u Zahlen von 1 bis 4 bedeuten.

2. Vernetzte Polyvinylalkohole, die erhalten werden durch Umsetzung von Polyvinylalkohol mit Verbindungen der Formel 1 gemäß Anspruch 1, wobei A eine Gruppe der Formel -(CH(OH))ᵣ-, eine Kombination von Gruppen der Formel - (CH(OH))ᵣ- und -(CH₂)ₘ- oder eine Kombination von Gruppen der Formel - (C(OH)(COOH))ₜ- und -(CH₂)ₘ- darstellt und R Wasserstoff oder Methyl bedeutet.

3. Verfahren zur Herstellung der vernetzten Polyvinylalkohole nach Anspruch 1 oder 2, **dadurch gekennzeichnet, dass** man Polyvinylalkohol mit der Verbindung der Formel 1 in Anwesenheit eines Lösemittels oder in Substanz durch Erhitzen umsetzt.

4. Verwendung der vernetzten Polyvinylalkohole gemäß Anspruch 1 zur Herstellung wasserlöslicher oder wasserquellbarer Folien oder Kapseln.
